# FASCICULE DE BREVET EUROPEEN

(11) **EP 3 682 142 B1**
(45) Date de publication et mention de la délivrance du brevet: **21.07.2021**
(21) Numéro de dépôt: 18783546.7
(22) Date de dépôt: 12.09.2018
(51) Int. Cl.: F16H 1/28, F16H 57/08

(54) **PIVOT ET TRAIN D'ENGRENAGES**
DREHGELENK UND ZAHNRAD
PIVOT AND GEARTRAIN

(30) Priorité: 12.09.2017 FR 1758420
(43) Date de publication de la demande: 22.07.2020
(73) Titulaire: Safran Transmission Systems, 92700 Colombes (FR)
(72) Inventeur: LEMOINE, Julie, Marie, Renée, 77550 Moissy-Cramayel (FR); DOMBEK, Alexis, Claude, Michel, 77550 Moissy-Cramayel (FR)
(74) Mandataire: Ernest Gutmann - Yves Plasseraud S.A.S.
(86) Numéro de dépôt international: PCT/FR2018/052238
(87) Numéro de publication internationale: WO 2019/053375

(56) Documents cités:
- EP-A1- 1 538 355
- EP-A1- 2 607 695
- WO-A1-2015/108709
- FR-A1- 2 991 421

## Description

La présente invention concerne un pivot à palier lisse et un, notamment pour une turbomachine à gaz pour aéronef, équipé d'au moins un tel pivot.

Dans la présente demande :
- axial a pour sens parallèle à l'axe (X) de rotation autour duquel sont montées rotatives des aubes de la turbomachine en cause,
- radial a pour sens perpendiculaire à l'axe X,
- circonférentiel a pour sens s'étendant autour de l'axe X,
- extérieur et intérieur (ou externe et interne) ont respectivement pour sens radialement extérieur et radialement intérieur par rapport à l'axe X.

L'application à un train d'engrenages, y compris épicycloïdal, notamment visée, qui comprend une couronne extérieure et des pignons satellites en prise avec un pignon central et avec la couronne extérieure et montés chacun libre en rotation sur un porte-satellites, les pignons satellites pouvant chacun tourner autour d'un axe de satellite par l'intermédiaire d'un pivot.

Parmi les trains d'engrenages épicycloïdaux sont notamment concernés :
- ceux dans lesquels la couronne extérieure est mobile en rotation (montage également appelé train réducteur épicycloïdal),
- mais aussi, ceux dans lesquels le porte-satellites est fixe et la couronne extérieure est mobile (montage également appelé train réducteur planétaire).

Le porte-satellite peut donc être fixe ou pivotant autour de l'axe du planétaire interne et du planétaire externe. L'entrée peut être formée par le planétaire interne, et la sortie par le porte-satellite.

Dans une turbomachine à gaz pour aéronef, des trains épicycloïdaux sont ainsi notamment utilisés pour réduire la vitesse de rotation du rotor de la soufflante, indépendamment de la vitesse de rotation de la turbine.

Le document FR 2 991 421 décrit un tel réducteur à train épicycloïdal, dans lequel les roues dentées formant les satellites sont montées sur des pivots du porte-satellite par l'intermédiaire de paliers lisses, ce qui est favorable en termes d'encombrement et de poids. Les paliers lisses ont une durée de vie quasiment infinie, pour autant qu'ils soient constamment alimentés avec une huile ne comportant pas de particules abrasives.

Cette sensibilité à la lubrification implique un contrôle de la déformée du palier côté pivot.

Or, il a été observé des désalignements non identiques entre les portées amont et les portées aval de différents pivots. Des déplacements tangentiels, dus aux couples appliqués, et/ou radiaux, dus à la force centrifuge, et non symétriques entre l'amont et l'aval parallèlement à l'axe de rotation X, ont été constatés sur des pivots.

Ceci est dommageable car susceptible d'affecter la fiabilité du pivot et l'efficacité du palier.

L'invention a notamment pour but d'apporter une solution simple, efficace et économique à ce problème.

A cet effet, elle propose un pivot pour palier lisse de train d'engrenages, le pivot présentant une partie formant un fût central, s'étendant autour d'un passage axial, et des rainures circonférentielles axialement opposées, ouvertes axialement (donc latéralement, en procurant ainsi une souplesse au pivot) qui séparent radialement, de deux parties latérales en porte-à-faux du pivot, deux parties extrêmes latérales axialement opposées du fût central, chaque rainure circonférentielle présentant :
- radialement, au moins une largeur,
- ainsi qu'au moins une profondeur, dans une direction suivant laquelle la rainure circonférentielle s'étend vers l'intérieur du corps circonférentiel, depuis une extrémité latérale libre de l'une desdites parties latérales en porte-à-faux jusqu'à une extrémité de fond de cette rainure,
ce pivot étant caractérisé en ce que, par rapport à un plan perpendiculaire audit axe du passage axial et passant par le milieu axial du passage axial, la distance axiale (ci-après D1) entre ledit plan et l'extrémité de fond de l'une des rainures circonférentielles est inférieure à la distance axiale (ci-après D2) entre ledit plan et l'extrémité de fond de la rainure circonférentielle axialement opposée.

Monté, un tel pivot transmet un couple entre plusieurs éléments. Une torsion du pivot peut en résulter. Le pivot peut se trouver placé de travers par rapport à son axe précité. La solution ci-avant permet de maintenir le pivot dans son axe. Avec un tel pivot monté sur un train épicycloïdal, on évite un désalignement des dentures du porte-satellite.

Appliquées à une turbomachine à gaz pour aéronef présentant une entrée d'air à partir de laquelle de l'air entre puis alimente, d'amont vers l'aval, au moins un compresseur puis au moins une turbine de la turbomachine :
- lesdites deux parties extrêmes latérales du pivot ci-avant deviendront respectivement des parties extrêmes axialement amont et axialement aval,
- et ladite plus grande distance axiale entre ledit plan et l'extrémité de fond de l'une des rainures circonférentielles sera située du côté de la partie extrême axialement aval.

Ainsi, on évitera ce qui a été constaté de façon étonnante, à savoir que lorsque les deux zones latérales de souplesse créées par les deux parties latérales en porte-à-faux, sont disposés symétriquement par rapport audit un plan passant par le milieu axial du passage axial, les désalignements des deux portées, respectivement amont et aval, sont différents l'un de l'autre : la zone aval se déforme plus que la zone amont.

En rendant dissymétrique ladite distance axiale, on peut apporter plus de souplesse à l'amont qu'à l'aval du pivot, donc mieux équilibrer le déplacement des portées et ainsi augmenter le déplacement possible de la zone de portée amont.

Alors que des rapports différents avaient été anticipés, il s'est par ailleurs avéré que desdites distances axiales présentant entre elles un rapport (ci-après D1/D2) compris entre 0.9 et 0.99, et de préférence entre 0.92 et 0.98, répondaient au mieux à un équilibre souhaité entre une capacité de déformation de toutes les zones latérales de souplesse et la dissymétrie précitée, avec pour résultat une optimisation dans l'alignement attendu des pièces concernées.

En effet, en rendant ainsi dissymétriques lesdites zones de souplesse il a été possible de diminuer le désalignement existant de plus de 5% en radial (Z) et de plus de 1.5% en tangentiel (Y).

Outre la maîtrise de l'alignement, il faut éviter sur un pivot comme ci-avant la présence de zones de surchauffe.

Afin donc de favoriser notamment les transferts thermiques dans le pivot et l'efficacité dans l'effet anti-désalignement, il est par ailleurs conseillé que le pivot précité soit monobloc, avec ses parties latérales en porte-à-faux et son fût central en une seule pièce.

Concernant maintenant le train d'engrenages, il est prévu qu'il comprenne une couronne extérieure et des pignons satellites en prise avec le pignon central et avec la couronne extérieure et qui sont montés chacun libre en rotation sur un porte-satellites, les pignons satellites pouvant chacun tourner autour d'un axe de satellite par l'intermédiaire d'un dit pivot.

Quant à la turbomachine précitée, elle pourra comprendre un tel train d'engrenages dont le pignon central pourra entourer et être solidaire en rotation d'un arbre du compresseur de la turbomachine.

Et en particulier, il pourra s'agir d'un cas dans lequel la couronne extérieure sera solidaire d'un carter ou d'une virole annulaire statique du compresseur basse pression.

Ainsi, l'invention est en particulier applicable à un train d'engrenage, tel qu'un train d'engrenage dans lequel la couronne extérieure est fixe. Dans ce cas, le train d'engrenages peut être qualifié de réducteur puisque la vitesse de sortie, c'est-à-dire celle du porte-satellites, est plus faible que la vitesse d'entrée, c'est-à-dire celle de l'arbre d'entrainement en rotation du pignon central.

Le porte-satellites peut par exemple être alors relié à une roue de soufflante amont de la turbomachine dont la vitesse est ainsi inférieure à la vitesse de l'arbre du compresseur.

De façon plus détaillée, on pourra trouver intérêt à ce que le train d'engrenages, auquel se rapporte aussi l'invention, soit tel que l'un au moins des pignons satellites présente une surface interne cylindrique montée pivotante autour d'une surface cylindrique du pivot considéré, le train d'engrenages comportant en outre des moyens d'amenée d'huile au niveau de l'interface entre lesdites surfaces cylindriques,
avec en outre le fait que porte-satellites comprend au moins ledit pivot du type précité, avec tout ou partie de ses caractéristiques et sur lequel est monté de façon mobile en rotation le satellite.

L'invention sera si nécessaire encore mieux comprise et d'autres détails, caractéristiques et avantages de l'invention pourront apparaître à la lecture de la description suivante faite à titre d'exemple non limitatif en référence aux dessins annexés dans lesquels :
- la figure 1 est un schéma de face d'un train d'engrenages, vu de face, axialement depuis l'amont,
- la figure 2 est un schéma cinématique d'un train épicycloïdal,
- la figure 3 est une vue en coupe locale du palier lisse,
- la figure 4 est un schéma longitudinal d'une turbomachine,
- la figure 5 est une perspective d'un pivot conforme à l'invention,
- la figure 6 est une coupe axiale selon VI-VI de la figure 5,
- la figure 7 est un détail agrandi de la figure 6,
- la figure 8 est un schéma de montage de pivots dans une configuration épicycloïdale,
- la figure 9 est un schéma de montage de pivots dans une configuration planétaire, et
- sur la figure 10 sont comparées deux solutions d'engrenages en haut épicycloïdale, en bas à planétaire.

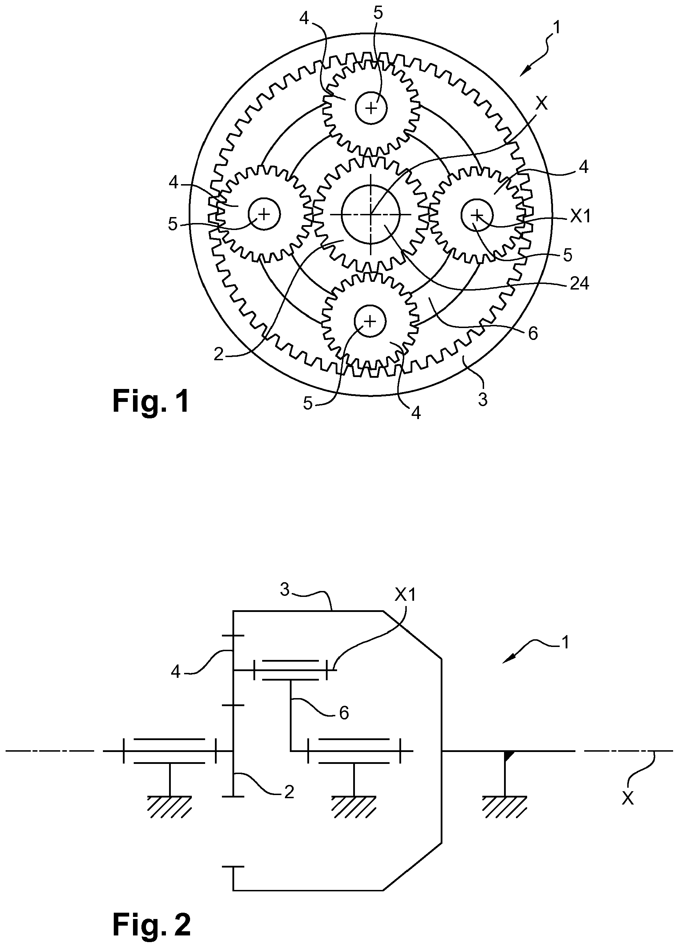

Les figures 1 et 2 illustrent schématiquement la structure d'un réducteur à train d'engrenages 1 sur laquelle l'invention peut s'appliquer. Le réducteur, appelé aussi train d'engrenages, les deux étant repérés communément 1, comporte classiquement un planétaire interne 2 (également appelé soleil ou solaire) et un planétaire externe 3 (également appelé couronne extérieure), les deux planétaires étant coaxiaux. Le planétaire interne, appelé aussi pignon central 2 peut être mobile en rotation autour de son axe X, le planétaire externe 3, appelé aussi couronne extérieure, pouvant être fixe, ou l'inverse. Le train d'engrenages 1 comporte en outre des satellites, appelés aussi pignons satellites, 4 montés de façon mobile en rotation sur des pivots 5 d'un porte-satellites 6. Chaque satellite 4 engrène à la fois avec le planétaire interne 2 et avec le planétaire externe 3. Le porte-satellites 6 est fixe ou pivotant autour de l'axe X du planétaire interne 2 et du planétaire externe 3. L'entrée peut être formée par le planétaire interne 2, et la sortie formée par le porte-satellites 6.

Le porte-satellites 6 peut être couplé en rotation à une hélice (dans le cas d'un turbopropulseur) ou à une roue de soufflante (dans le cas d'un turboréacteur).

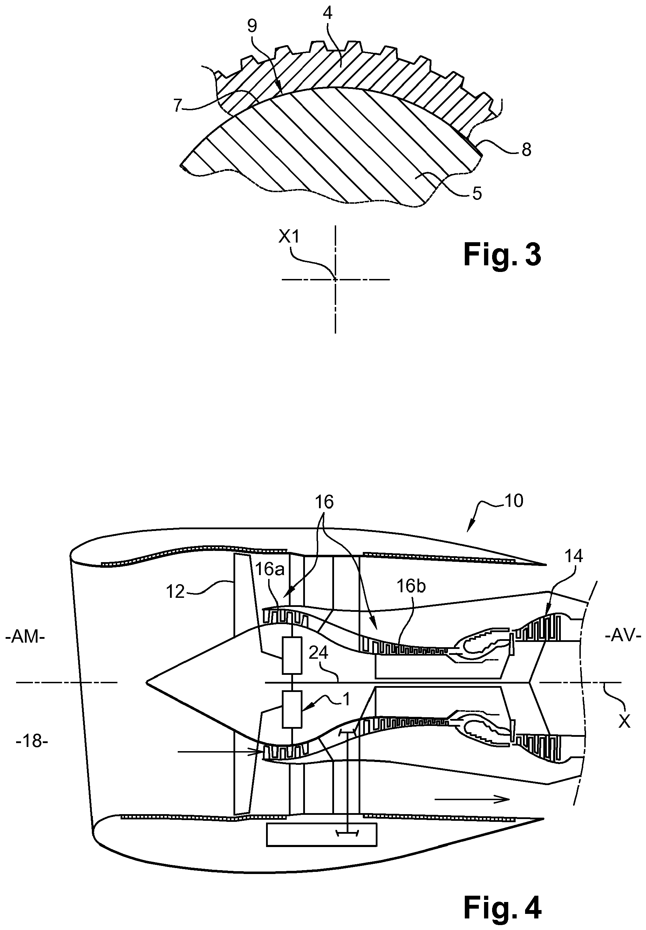

Dans une turbomachine 10 à gaz pour aéronef, des trains d'engrenages 1 sont notamment utilisés en tant que réducteur de vitesse pour réduire la vitesse de rotation d'un rotor, tel qu'une soufflante 12 figure 4, indépendamment de la vitesse de rotation d'au moins une turbine 14 couplée axialement en aval à au moins un compresseur 16 dont la turbomachine est aussi équipée. A partir de l'entrée d'air 18 frontale, la soufflante 12, puis notamment le compresseur 16 reçoivent de l'air.

Le pignon central 2 entoure et est alors solidaire en rotation de l'arbre 24 du compresseur 16; voir exemple figures 1,4. Le train d'engrenages 1 peut en particulier être monté dans une enceinte annulaire formée radialement à l'intérieur d'un compresseur basse pression 16a agencé en aval de la roue de soufflante 12 et en amont d'un compresseur haute pression 16b (voir figure 4).

Comme cela est visible en considérant les figures 1-3, chaque satellite 4 comporte une surface interne cylindrique 7 montée pivotante autour d'une surface cylindrique 8 (surface extérieure de portée) du pivot 5 correspondant du porte-satellites 6, de façon à former un palier lisse.

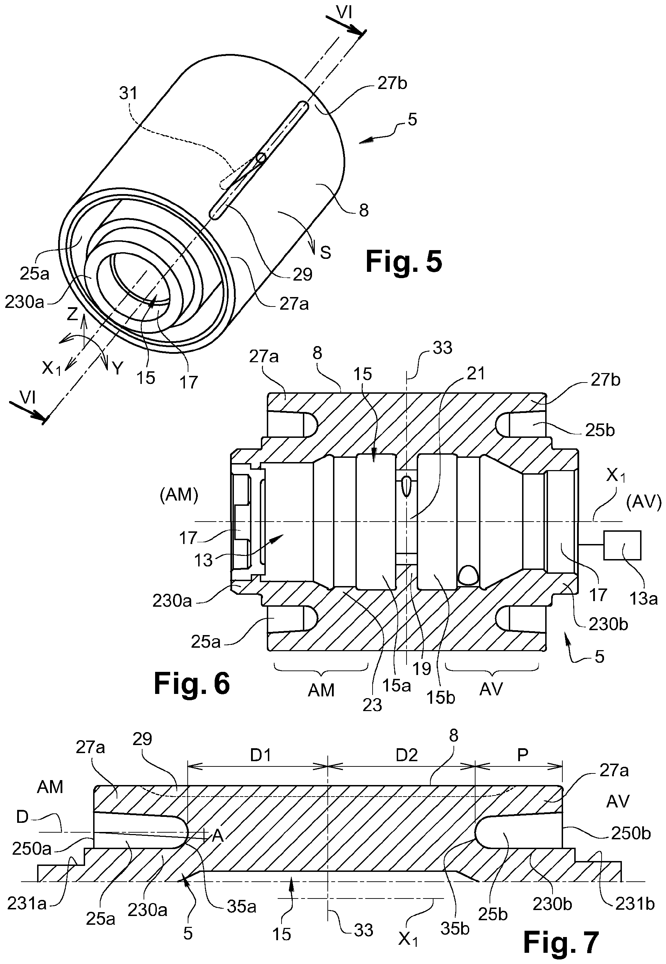

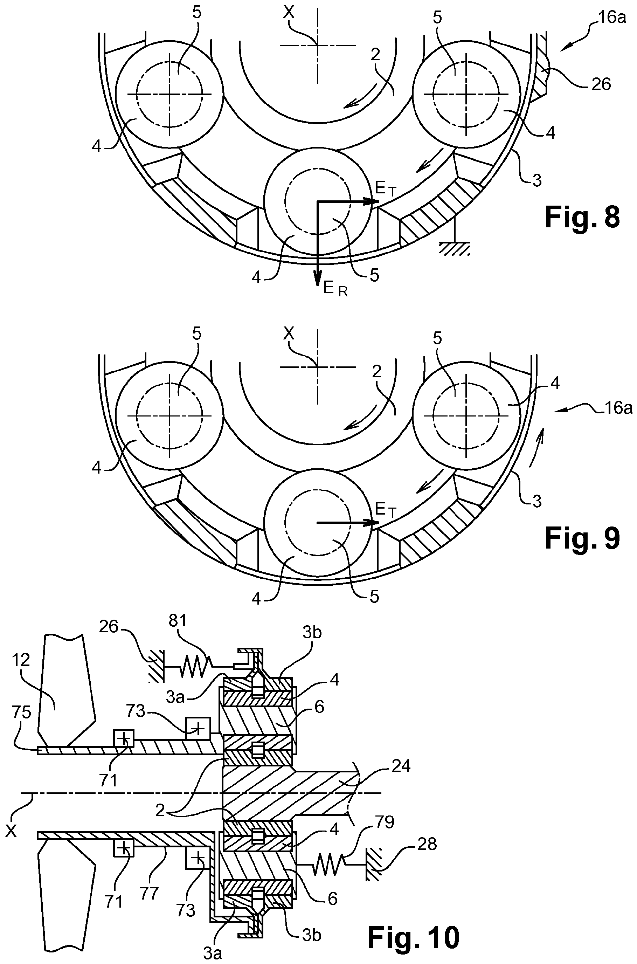

Il est donc nécessaire d'alimenter en huile l'interface 9 entre ces deux surfaces cylindriques 7, 8. Pour cela, comme illustré figure 6, le train d'engrenages 1 comporte des moyens 13 d'amenée de lubrifiant relié à une source de lubrifiant 13a et comportant une chambre 15 (51 figure 5), appelée aussi passage axial, s'étendant sensiblement selon l'axe X1 du pivot 5 concerné. L'une au moins des extrémités 17 de la chambre 15 est raccordée à un canal d'entrée d'huile. Si une seule des extrémités 17 forme une arrivée d'huile, l'autre extrémité est bouchée. Typiquement l'extrémité 17 bouchée sera à gauche figures 5-7. La chambre 15 peut être globalement cylindrique. Elle est en une ou plusieurs parties, telles que les deux parties 15a, 15b (voir figure 9) séparées par une cloison médiane 19 s'étendant radialement. Les extrémités latérales 17 de la chambre 15 comportent des passages axiaux de plus faible diamètre que la chambre 15, dont l'un au moins forme une entrée d'huile, comme indiqué précédemment. La cloison médiane 19 est traversée par un orifice 21 faisant communiquer les parties 15a, 15b de la chambre 15.

Avec les figures 4 et 5, on peut constater que le pivot 5 présente en outre une surface (sensiblement) cylindrique externe 8 d'axe X1 adaptée à former un palier lisse avec la surface (sensiblement) cylindrique interne 7 du pignon satellite 4, ainsi qu'une partie formant un fût radialement central 23 s'étendant autour du passage axial 15. C'est autour de l'axe X1 que le pivot est adapté à tourner, dans le sens S imposé par son montage sur le réducteur. Ce pivot présente en outre des rainures 25a,25b circonférentielles axialement opposées, ouvertes axialement (donc latéralement), procurant une souplesse au pivot. Ces rainures circonférentielles séparent radialement de deux parties latérales 27a,27b en porte-à-faux deux parties extrêmes latérales 230a,230b chacune à surface de portée périphérique 231a,231b (seule celle 230a est visible figure 5) axialement opposées du fût central 23.

De façon approximative, la direction (telle que D ; figure 7) suivant laquelle s'étend une rainure circonférentielle est axiale (parallèle à l'axe X1). Plus finement, on notera une inclinaison radiale A de quelques degrés vers l'intérieur.

Chaque rainure circonférentielle 25a,25b présente une extrémité 35a,35b de fond. Et, chaque rainure circonférentielle présente en outre une extrémité latérale libre 250a,250b située au niveau de l'extrémité libre correspondante de la partie latérale en porte-à-faux 27a ou 27b considérée et (au moins) une profondeur (P), dans une direction suivant laquelle la rainure circonférentielle s'étend vers l'intérieur du pivot, depuis ladite extrémité latérale libre jusqu'à l'extrémité 35a,35b de fond correspondante.

Pour son alimentation en liquide lubrifiant, la surface circonférentielle, radialement extérieure 8 présente une fente 29 d'alimentation allongée parallèlement à l'axe X1. Cette fente communique avec un conduit radial 31, lequel communique avec le passage axial précité 15. On considérera que le lubrifiant liquide qui sort de la fente 29 coule sur la surface extérieure 8 dans le sens S de la figure 5, quand le réducteur 1 fonctionne.

Sur les pivots de l'art antérieur, montés sur des réducteurs à trains épicycloïdaux et/ou des turbomachines à gaz pour aéronef, il a été constaté que, lorsque les deux zones latérales de souplesse créées par les deux parties latérales 27a,27b en porte-à-faux sont disposées symétriquement par rapport à un plan 33 perpendiculaire audit axe X1 du passage axial 15et passant par le milieu axial de ce passage axial, les désalignements des portées, respectivement amont et aval, du palier, sont différents l'un de l'autre. Le plan 33 est typiquement le plan de la surface extérieure de portée 8 du pivot dans lequel se situe(n)t la/les denture(s) du/des pignon(s) en prise avec le pivot considéré (pignon 4 figure 1 ou 3).

Pour surmonter cet inconvénient, il est ici proposé que, par rapport au plan 33, la distance axiale D1 (figure 7) entre ce plan 33 et l'une des extrémités 35a,35b de fond des rainures circonférentielles soit inférieure à la distance axiale D2 entre ledit plan et l'autre extrémité de fond de la rainure circonférentielle axialement opposée.

Dans le montage prévu sur le réducteur 1, qui est donc vu de face, axialement depuis l'amont, lesdites deux parties extrêmes latérales 230a,230b sont respectivement des parties extrêmes axialement amont (AM) et axialement aval (AV). Et la distance axiale entre ledit plan 33 et l'extrémité de fond 35a ou 35b de la rainure circonférentielle à considérer est plus grande du côté de la partie extrême axialement aval 230b (distance axiale D2) que du côté de la partie extrême axialement amont 230a (distance axiale D1).

Ainsi, si, comme constaté sur des montages actuels de turbomachine à gaz pour aéronef, la zone aval (AV) d'un pivot de l'art antérieur se déforme plus que la zone amont (AM), on aura, avec ces distances axiales D1 et D2, réussi à tenir compte de ces déséquilibres et donc à rééquilibrer le déplacement des portées et à ainsi augmenter le déplacement possible de la zone de portée amont.

A cet égard, sur un train épicycloïdal 1 pourvu de pivots 5 comme montré dans l'exemple en référence à la figure 1, on prévoira de préférence un rapport D1 / D2 compris entre 0.92 et 0.98.

De base les efforts appliqués au pivot sont déséquilibrés entre l'amont et l'aval (à cause de la forme non symétrique du porte-satellites par rapport au plan médian). Modifier la distance entre les portées et le plan médian et la raideur localement permet donc à terme d'atteindre sensiblement la même raideur des deux côtés du plan médian, sur l'ensemble du réducteur. Ainsi la partie extérieure cylindrique du pivot reste parallèle à l'axe de rotation global du réducteur, améliorant le fonctionnement des dentures.

Obtenir une continuité de matière du pivot doit favoriser la conduction de la chaleur et donc diminuer la température sur la surface circonférentielle extérieure 8, sans perturber le besoin de souplesse pour l'alignement, là où le besoin existe.

Aussi, afin de favoriser notamment encore ces transferts thermiques et l'efficacité dans l'effet anti-désalignement, il est par ailleurs conseillé que le pivot précité soit monobloc, avec ses parties latérales en porte-à-faux 27a,27b et son fût central 23 en une seule pièce.

Sur les figures 8 et 10 (en haut), on a de nouveau schématisé le cas d'un montage de pivots 5 dans une configuration épicycloïdale, donc dans un cas où le pignon central 2 est mobile, mais la couronne extérieure 3 fixe, solidaire d'un carter extérieur, appelé aussi virole annulaire, statique, 26 du compresseur 16, en particulier du compresseur basse pression 16a; voir figure 10 en haut où une liaison à ressort 81 relie la virole annulaire 26 aux demi-couronnes 3a,3b. Comme illustré, des efforts tant tangentiaux E_{T} dus aux couples appliqués, que radiaux E_{R}, dus à la force centrifuge, sont exercés sur chaque pivot 5.

Sur la figure 9, un autre cas d'application est schématisé, celui d'un montage de pivots 5 dans une configuration planétaire, donc dans un cas où tant le pignon central 2 que la couronne extérieure 3 sont mobiles en rotation autour de l'axe X du compresseur 16a, en particulier du compresseur basse pression. Comme illustré, des efforts tangentiaux E_{T}, dus aux couples appliqués, sont exercés sur chaque pivot 5. Cette situation peut être celle d'un open-rotor ou d'une double soufflante.

Sur la figure 10 sont comparées des solutions à trains d'engrenages épicycloïdaux dans lesquelles :
- en haut, on est dans une solution à porte-satellites mobile et à couronne fixe,
- en bas, le train d'engrenage est tel que le porte-satellites 6 est fixe (vis-à-vis d'un carter, appelé aussi virole annulaire, statique 28) et la couronne extérieure est mobile (solution dite aussi à train réducteur planétaire).

En liaison avec certaines figures précédentes, on y retrouve en commun un porte-satellites 6 porteur de satellites 4, un planétaire interne 2 et un planétaire externe, ici en deux demi-couronnes 3a,3b respectivement amont et aval vis-à-vis de l'axe de rotation X. Le planétaire interne 2 est en prise avec l'arbre axial 24, l'arbre du compresseur basse pression dans l'exemple. Des paliers 71,73 supportent et guident axialement la soufflante 12.

Dans la solution en haut, via un prolongement axial amont 75 supporté et guidé par les paliers 71,73, le porte-satellites 6 est en prise avec la soufflante 12 et un porte-couronne fixe est adjoint, lié ici à la demi-couronne 3a amont.

Dans la solution du bas, c'est le planétaire externe (demi-couronnes 3a,3b) qui, via un prolongement axial amont 77 supporté et guidé par les paliers 71,73, est en prise avec la soufflante 12. Le porte-satellites 6 est fixe (liaison à ressort 79 avec la virole annulaire, statique, 28).

## Revendications

1. Pivot (5) pour palier lisse de train d'engrenages, le pivot (5) présentant une partie (23) formant un fût central, s'étendant autour d'un passage axial (15) ayant un axe (X1), et des rainures circonférentielles (25a,25b) axialement opposées, ouvertes latéralement, et qui séparent radialement, de deux parties latérales en porte-à-faux (27a,27b), deux parties extrêmes latérales axialement opposées (230a,230b) du fût central, chaque rainure circonférentielle (25a, 25b) présentant au moins une profondeur (P) dans une direction suivant laquelle la rainure circonférentielle (25a, 25b) s'étend vers l'intérieur du pivot (5), depuis une extrémité latérale libre (250a,250b) de l'une desdites parties latérales en porte-à-faux (27a,27b) jusqu'à une extrémité de fond (35a,35b) de la rainure circonférentielle (25a, 25b), **caractérisé en ce que**, par rapport à un plan (33) perpendiculaire audit axe (X1) du passage axial (15) et passant par le milieu axial du passage axial (15), la distance axiale (D1) entre ledit plan (33) et l'extrémité de fond (35a) de l'une des rainures circonférentielles (25a) est inférieure à la distance axiale (D2) entre ledit plan (33) et l'extrémité de fond (35b) de la rainure circonférentielle (25b) axialement opposée.

2. Pivot (5) selon la revendication 1, **caractérisé en ce qu'**il est monobloc, avec ladite partie (23) formant fût central et lesdites parties latérales (27a,27b) en porte-à-faux qui sont en une seule pièce.

3. Pivot (5) selon la revendication 1 ou 2, **caractérisé en ce que** lesdites distances axiales (D1,D2) présentent entre elles un rapport D1/D2 compris entre 0.9 et 0.99.

4. Train d'engrenages d'une turbomachine à gaz pour aéronef, comprenant une couronne extérieure (3) et des pignons satellites (4) en prise avec un pignon central (2) et avec une couronne extérieure (3), la couronne extérieure (3) et les pignons satellites (4) étant montés chacun libre en rotation sur un porte-satellites (6), les pignons satellites (4) pouvant chacun tourner autour d'un axe de satellite correspondant à un dit axe (X1) de passage axial (15), par l'intermédiaire du pivot (5) selon l'une quelconque des revendications 1 à 3.

5. Turbomachine à gaz pour aéronef comprenant ledit train d'engrenages selon la revendication 4 dont le pignon central (2) entoure et est solidaire en rotation d'un arbre (24) d'un compresseur de la turbomachine.

6. Turbomachine selon la revendication 5, dans laquelle le compresseur comprend un compresseur basse pression (16b) et la couronne extérieure (3) est solidaire d'un carter ou d'une virole annulaire statique (26) du compresseur basse pression (16b).

7. Turbomachine selon la revendication 5, dans laquelle le porte-satellites (6) est solidaire d'un carter ou d'une virole annulaire, statique (28).

8. Turbomachine selon l'une des revendications 5 à 7, la turbomachine présentant une entrée d'air (18) à partir de laquelle de l'air entre puis alimente, d'amont vers l'aval, au moins le compresseur puis au moins une turbine de la turbomachine, **caractérisée en ce que** lesdites deux parties extrêmes latérales (230a,230b) sont respectivement des parties extrêmes axialement amont et axialement aval, et ladite plus grande distance axiale (D2) entre ledit plan (33) et l'extrémité de fond (35a,35b) de l'une des rainures circonférentielles (25a,25b) est située du côté de la partie extrême axialement aval (230b).

## Patentansprüche

1. Drehzapfen (5) für ein Getriebegleitlager, wobei der Drehzapfen (5) einen Abschnitt (23) aufweist, der einen zentralen Schaft bildet, der sich um einen axialen Durchgang (15) mit einer Achse (X1) erstreckt, und axial gegenüberliegende, seitlich offene Umfangsnuten (25a, 25b), die radial zwei axial gegenüberliegende seitliche Endabschnitte (230a, 230b) des zentralen Schafts von zwei freitragenden Seitenabschnitten (27a, 27b) trennen, wobei jede Umfangsnut (25a, 25b) mindestens eine Tiefe (P) in einer Richtung aufweist, in der sich die Umfangsnut (25a, 256) von einem freien Seitenende (250a, 250b) einer der freitragenden Seitenabschnitte (27a, 27b) zu einem unteren Ende (35a, 35b) der Umfangsnut (25a, 25b) zum Inneren des Drehzapfens (5) erstreckt, **dadurch gekennzeichnet, dass** der axiale Abstand (D1) zwischen der Ebene (33) und dem unteren Ende (35a) einer der Umfangsnuten (25a) in Bezug auf eine Ebene (33), die senkrecht zur Achse (X1) des axialen Durchgangs (15) steht und durch die axiale Mitte des axialen Durchgangs (15) verläuft, kleiner ist, als der axiale Abstand (D2) zwischen der Ebene (33) und dem unteren Ende (35b) der axial gegenüberliegenden Umfangsnut (25b).

2. Drehzapfen (5) nach Anspruch 1, **dadurch gekennzeichnet, dass** er mit dem Abschnitt, der den zentralen Schaft (23) bildet, und den freistehenden, einteiligen Seitenabschnitten (27a, 27b) ein einziges Stück bildet.

3. Drehzapfen (5) nach Anspruch 1 oder 2, **dadurch gekennzeichnet, dass** das Verhältnis D1/D2 zwischen den Achsabständen (D1, D2) 0,9 bis 0,99 ist.

4. Getriebe einer Gasturbomaschine für Luftfahrzeuge, das einen Außenkranz (3) und in ein zentrales Zahnrad (2) und einen Außenkranz (3) eingreifende Planetenräder (4) umfasst, wobei der Außenkranz (3) und die Planetenräder (4) jeweils frei drehend auf einen Planetenträger (6) montiert sind, wobei sich die Planetenräder (4) mittels des Drehzapfens (5) nach einem der Ansprüche 1 bis 3 jeweils um eine Planetenradachse drehen können, die einer Achse (X1) des axialen Durchgangs (15) entspricht.

5. Gasturbomaschine für Luftfahrzeuge mit einem Getriebe nach Anspruch 4, dessen zentrales Zahnrad (2) eine Welle (24) eines Verdichters der Turbomaschine umgibt und drehfest mit dieser verbunden ist.

6. Turbomaschine nach Anspruch 5, in welcher der Verdichter einen Niederdruckverdichter (16b) umfasst und der Außenkranz (3) fest mit einem Gehäuse oder einem statischen Ringmantel (26) des Niederdruckverdichters (16) verbunden ist.

7. Turbomaschine nach Anspruch 5, in welcher der Planetenträger (6) fest mit einem Gehäuse oder einem statischen Ringmantel (28) verbunden ist.

8. Turbomaschine nach einem der Ansprüche 5 bis 7, wobei die Turbomaschine einen Lufteinlass (18) aufweist, über den Luft eintritt und dann von stromaufwärts nach stromabwärts mindestens den Verdichter und dann mindestens eine Turbine der Turbomaschine versorgt, **dadurch gekennzeichnet, dass** die beiden seitlichen Endabschnitte (230a, 230b) jeweils axial stromaufwärts und axial stromabwärts gelegene Endabschnitte sind, und sich der größere Achsabstand (D2) zwischen der Ebene (33) und dem unteren Ende (35a, 35b) einer der Umfangsnuten (25a, 25b) auf der Seite des axial stromabwärts gelegenen Endabschnitts (230b) befindet.

## Claims

1. A pivot pin (5) for an epicyclic gear train sliding bearing, the pivot pin (5) having a portion (23) forming a central shank extending around an axial passage (15) having an axis (X1), and axially opposed circumferential grooves (25a,25b) which are open laterally and which radially separate two axially opposed lateral end portions (230a,230b) of the central shank from two cantilevered lateral portions (27a,27b), each circumferential groove (25a,25b) having at least one depth (P), in a direction in which the circumferential groove (25a,25b) extends inwardly of the pivot pin (5), from a free lateral end (250a,250b) of one of said cantilevered lateral portions (27a,27b) to a bottom end (35a,35b) of the circumferential groove (25a,25b), **characterised in that**, with respect to a plane (33) perpendicular to said axis (X1) of the axial passage (15) and passing through the axial centre of the axial passage (15), the axial distance (D1) between said plane (33) and the bottom end (35a) of one of the circumferential grooves (25a) is smaller than the axial distance (D2) between said plane (33) and the bottom end (35b) of the axially opposite circumferential groove (25b).

2. A pivot pin (5) according to claim 1, **characterized in that** it is in one piece, with said central shank (23) and said cantilevered lateral parts (27a,27b) being in one piece.

3. A pivot pin (5) according to claim 1 or 2, **characterized in that** said axial distances (D1,D2) have a ratio D1/D2 with respect to each other between 0.9 and 0.99.

4. A planetary gear train of an aircraft gas turbine engine, comprising an outer ring gear (3) and planet pinions (4) meshing with a central pinion (2) and with an outer ring gear (3), the outer ring gear (3) and the planet pinions (4) being each mounted for a free rotation on a planet carrier (6), each planet pinion (4) being able to rotate about a planet axis (X1) matching one said axis (X1) of the axial passage (15), via the pivot pin (5) according to any one of claims 1 to 3.

5. An aircraft gas turbine engine comprising said planetary gear train according to claim 4, the central pinion (2) of which surrounds and is solidarized in rotation with a shaft (24) of a compressor of the turbine engine.

6. The turbine engine according to claim 5, wherein the compressor comprises a low pressure compressor (16b) and the outer ring gear (3) is solidarized with a casing or a static annular shell (26) of the low pressure compressor (16b).

7. The turbine engine according to claim 5, wherein the planet carrier (6) is solidarized with a casing or an annular shell, which is static, (28).

8. The turbine engine according to one of claims 5 to 7, the turbine engine having an air inlet (18) from which air enters and then feeds, in a direction oriented from upstream to downstream, at least the compressor and then at least one turbine of the turbine engine, **characterised in that** said two lateral end parts (230a,230b) are respectively axially upstream and axially downstream end portions, and said largest axial distance (D2) between said plane (33) and the bottom end of one of the circumferential grooves (25a,25b) is located at the axially downstream end portion (230b).
